(19) **Europäisches Patentamt**
**European Patent Office**
**Office européen des brevets**

(11) **EP 1 989 038 B1**

(12) **EUROPEAN PATENT SPECIFICATION**

(45) Date of publication and mention
of the grant of the patent:
**30.12.2009 Bulletin 2009/53**

(21) Application number: **07713032.6**

(22) Date of filing: **12.02.2007**

(51) Int Cl.:
**B29C 63/16** (2006.01)     **B30B 5/02** (2006.01)
**G02B 1/08** (2006.01)      **G02B 5/30** (2006.01)
**G02C 7/12** (2006.01)      **B29D 11/00** (2006.01)

(86) International application number:
**PCT/IB2007/000324**

(87) International publication number:
**WO 2007/096725 (30.08.2007 Gazette 2007/35)**

(54) **METHOD FOR PROVIDING A POLARIZING LAYER ON AN OPTICAL ELEMENT**

VERFAHREN ZUM BILDEN EINER POLARISATIONSSCHICHT AUF EINEM OPTISCHEN ELEMENT

PROCÉDÉ DE DISPOSITION D'UNE COUCHE POLARISANTE SUR UN ÉLÉMENT OPTIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **23.02.2006 US 361318**

(43) Date of publication of application:
**12.11.2008 Bulletin 2008/46**

(73) Proprietor: **Essilor (Compagnie Generale D'
Optique)**
**94220 Charenton-Le-Pont (FR)**

(72) Inventors:
• **MOSSE, Herbert**
**St Petersburg, FL 33709 (US)**
• **MUISENER, Richard**
**F-94220 Charenton-Le-Pont (US)**

(74) Representative: **Cabinet Plasseraud**
**52, rue de la Victoire**
**75440 Paris Cedex 09 (FR)**

(56) References cited:
**WO-A-95/08133     WO-A-97/38345
WO-A-99/54118     WO-A-2005/105942**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The invention relates to a method according to claim 1 for providing a polarizing layer on an optical element. It also relates to an optical element according to claim 18 with a polarizing layer thereon obtained by implementing such method.

**-- BACKGROUND OF THE INVENTION --**

Methods are already used for applying a film with optical properties onto an eyeglass surface as known e.g. from WO 95/08133. Because the eyeglass surface is curved, some of these methods comprise a preforming step, so that the film is warped before it is applied on the eyeglass surface. Eyeglasses with optical films which are produced in this way are free of defects and exhibit good optical quality. In particular, their optical power is not altered by the films.

Optical films with different properties are commercially available. In particular, there are films designed for filtering light with respect to a defined wavelength range, or for suppressing a reflected light, or for contrast enhancement, etc. Other films are designed for polarizing a light beam upon transmission. Such films may contain dichroic compounds which are capable of absorbing a light radiation when a polarization direction of the light is parallel to an angular orientation of the compounds. In this case, it is necessary that the dichroic compounds contained in the film have one and same orientation, for the film to produce a macroscopic polarizing effect. In this respect, US patent 6,563,640 discloses an order parameter which characterizes the orientation variations of the dichroic compounds. It is based on light transmission measurements carried out with the polarizing film.

Because the polarizing efficiency of a film with dichroic compounds is related with a variation in the orientation of these compounds, such film should not be stretched in any manner that would produce misalignment of the dichroic compounds. In particular, the efficiency of a polarizing film is expected to be significantly degraded when the film is applied onto a curved surface. For this reason, no eyeglass is commercially available which is produced by applying a polarizing film containing dichroic compounds onto a curved surface.

Eyeglasses with polarizing effect can be produced using other techniques, for example by printing parallel electrically conducting wires on a surface of each eyeglass. But such method is quite expensive, and the wires must be accurately dimensioned not to be visible and not to produce diffractive effects. Furthermore, because defects in the wires are strongly visible, such method does not allow to meet the quality requirements generally used in the ophthalmic field.

Therefore, an object of the present invention is to propose a method for producing optical elements with polarizing effect, which is reliable, cheap and compatible with mass production.

**-- SUMMARY OF THE INVENTION --**

The invention proposes a method for providing a polarizing layer on a curved optical element, which comprises the following steps:

/a/ applying a polarizing layer on a surface of a resilient support, this support being in a planar shape;
/b/ warping the resilient support with the polarizing layer thereon;
/c/ bringing the polarizing layer supported by the warped support into contact with a curved surface of the optical element; and
/d/ removing the support from the optical element surface so that the polarizing layer is transferred from the support onto the optical element.

Furthermore, the optical element surface is coated with an adhesive layer prior to step /c/.

According to the invention and claim 1, the polarizing layer is preformed in step /b/, before it is applied on the optical element surface in step /c/. Because this preforming step is carried out with a resilient support for the polarizing layer, the warping of the support together with the layer does not reduce the polarizing efficiency of the layer. The resilient support acts for preventing that disordered stresses modify a structure of the polarizing layer. In particular, when the polarizing effect is produced by dichroic compounds spread in the polarizing layer, an orientation of the compounds is maintained during the preforming step. After preforming, a transfer of the polarizing layer from the support to the optical element is performed in steps /c/ and /d/.

An order parameter S can be used for quantifying an anisotropy of the polarizing layer. Such parameter can be calculated using the following formula:

$$S = \frac{D_T - D_L}{D_T + 2D_L} \qquad (1)$$

where $D_T$ and $D_L$ are measured optical densities of a light beam after being transmitted through the polarizing layer, respectively for transverse and parallel orientations of a polarization plane of the polarizing layer with respect to a polarization plane of the light beam before transmission. In a preferred embodiment of the invention, a value of the order parameter S remains equal to or greater than 0.8 during steps /b/ to /d/. In other words, the preforming step and the transfer of the polarizing layer from the resilient support to the optical element are performed according to the invention so that the value of the order parameter does not decrease below 0.8. The polarizing efficiency of the layer is thus maintained.

The polarizing layer may be formed initially on the resilient support. For example, the polarizing layer may be formed in step /a/ from an appropriate chemical blend which is deposited on the support and then suitably treated in-situ. In particular, step /a/ may comprise the following substeps:

/a1/ forming a layer of a substance comprising organic dichroic compounds on the surface of the resilient support; and
/a2/ applying a stress to the substance layer when the resilient support is in a planar shape, so that the dichroic compounds produce a polarizing effect of the substance layer for a light beam transmitted through this layer.

It is particularly advantageous that the resilient support has a planar shape during the substeps /a1/ and /a2/. This makes it easier to form a polarizing layer with a constant thickness and to apply a uniform stress.

Alternatively, the polarizing layer may consist in a polarizing film which is purchased separately, and then applied on the support. The planar shape of the resilient support during step /a/ greatly facilitates again a defect-free arrangement of the polarizing layer on the support.

According to an alternative implementation of the invention, steps /b/ and /c/ are carried out simultaneously, so that the polarizing layer enters in contact with the adhesive layer on the curved surface of the optical element at the same time the resilient support is made warped with the polarizing layer thereon. Preferably, the resilient support is made warped by forcing it with the polarizing layer thereon against the optical element surface, by means of a fluid pressure applied to this support on a side opposite to the polarizing layer.

The invention also proposes an optical element which comprises:

- an optical base element with at least one curved surface;
- an adhesive layer arranged on this curved surface; and
- a polarizing layer retained on the optical base element by the adhesive layer.

The polarizing layer comprises organic dichroic compounds which are arranged within this layer so as to produce a polarizing effect for a light beam transmitted through the optical element.

Such optical element may be designed for ophthalmic use. In particular, it may be an eyeglass, possibly designed for mounting within a frame of spectacles.

## -- BRIEF DESCRIPTION OF THE DRAWINGS --

Figure 1 is a general view of a first device suitable for implementing a method according to the invention.

Figure 2 is a cross-sectional view of an optical element used for implementing a method according to the invention.

Figure 3 is a cross-sectional view of a carrier used for implementing a method according to the invention.

Figure 4 is a general view of a second device suitable for implementing a method according to the invention.

For sake of clarity, the elements represented on these figures are not sized in relation with actual dimensions, nor with ratios of actual dimensions.

**-- DETAILED DESCRIPTION OF THE INVENTION --**

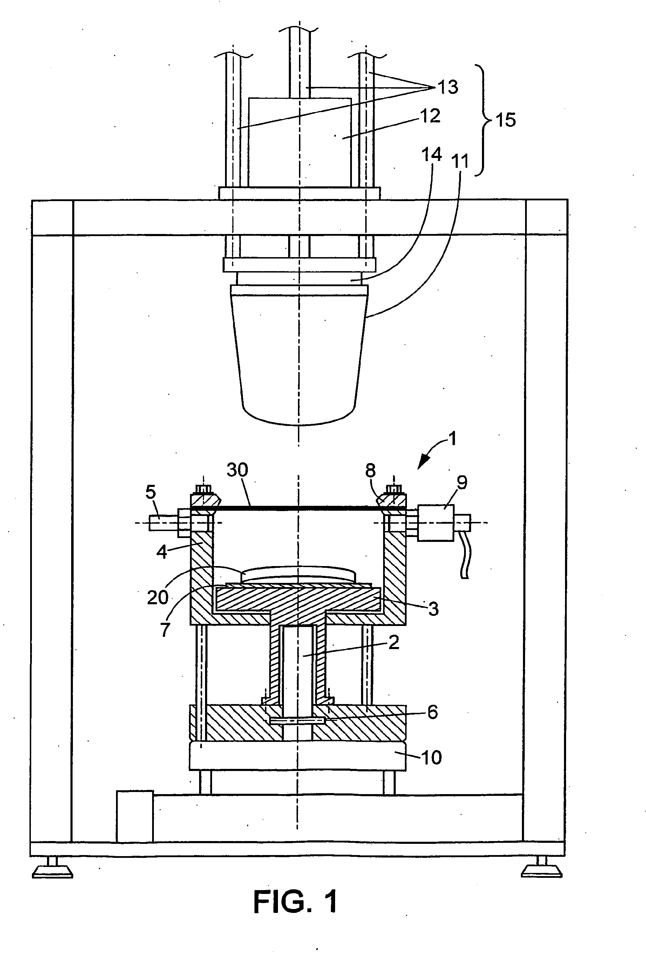

According to Figure 1, a device for providing a polarizing layer on an optical element comprises a supporting structure, a vacuum vessel 1 and a stamp 11 vertically movable above the vacuum vessel 1.

The vacuum vessel 1 may be cylindrically shaped, with a vertical axis. It has a peripheral wall 4 and an aperture in its lower end surface. It is arranged in the supporting structure at a fixed height above a base plate 10. A vertical cylinder 2 is arranged between the base plate 10 and the vacuum vessel 1. A piston 3 is vertically movable over the cylinder 2 and penetrates into the vacuum vessel 1 through the aperture, for lifting a holder 7 inside the vessel. The cylinder 2 is provided with a stop-system 6 which is designed for maintaining the piston 3 in a fixed desired position.

A fixing ring 8 is arranged on the upper edge of the peripheral wall 4. It is designed for maintaining a peripheral edge of a diaphragm so as to seal the vacuum vessel 1.

The vacuum vessel 1 is further provided with a gas inlet 9 and a gas outlet 5. The gas inlet 9 may be connected to a gas source, and the gas outlet 5 is connected to a pumping system so as to control a depression inside the vacuum vessel 1.

The stamp 11 is mounted on the supporting structure with vertical guides 13. It can be translated downwards by means of a suitable translation system 12. Thus, the stamp 11 can be applied against the diaphragm with a pressure controlled by a thrust controller 14. The translation system 12 may based on a screw driven by a stepper motor, and the thrust controller 14 may comprise a piezoelectric element. The stamp 11, together with the translation system 12, the guides 13 and the controller 14 form a stamping system, generally referenced 15. The stamping system 15 is located outside the vacuum vessel 1 and is designed for forcing the stamp 11 against the diaphragm so as to push a center part of this latter towards inside of the vacuum vessel.

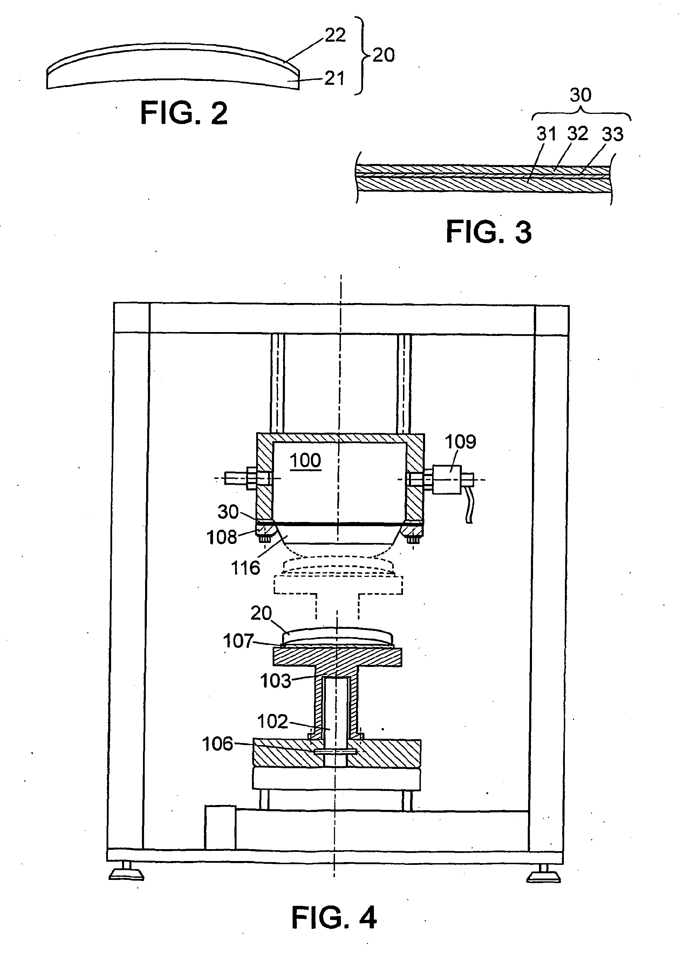

An optical element 21, for example an eyeglass, may be of any material, including organic materials such as polythiourethane, polycarbonate, polyallylcarbonate, polyepisulfides or acrylate-based materials. According to Figure 2, the eyeglass 21 is covered with an adhesive layer 22 on a convex front surface. Although two implementations of the invention are described hereafter for providing a polarizing layer on a convex surface of the eyeglass, it must be understood that the polarizing layer may be provided on a concave surface of an optical element by using similar methods.

The adhesive layer 22 may comprise an epoxy-type material, a pressure-sensitive adhesive or a latex-type material. It may be deposited on the surface of the eyeglass 21 using any deposition process known in the art. In particular, it may be deposited by spin coating. Such deposition process does not require important processing tools, and can be implemented quite rapidly with most of adhesive materials.

The eyeglass 21 and the adhesive layer 22 form a substrate generally referenced 20 which is mounted on the holder 7 within the vacuum vessel 1. The substrate 20 is arranged on the holder 7 with the adhesive layer 22 upwards.

A carrier 30 (Figure 3) comprises a resilient support 31 and a polarizing layer 32. The resilient support 31 may be based on polyethylene, polypropylene, polyethyleneterephtalate, polycarbonate, silicone or a visquene.

The polarizing layer 32 may be initially in a form of a self-supported film, purchased independently. Then it is applied on the resilient support 31 by using any application process of a planar film onto a developable support. Alternatively, the polarizing layer 32 may be directly formed on the resilient support 31, for example by spin coating using a suitable precursor solution. In this case, the polarizing layer may be applied on the support 31 in the form of a solution spread on the support surface, and subsequently cured by heating and/or irradiation with UV light, depending on the precursor solution.

The polarizing layer 32 may comprise dichroic compounds, selected so that at least part of these dichroic compounds are molecules or molecule fragments with planar structures and can form a crystalline lattice in the polarizing layer. In some cases, the molecules or molecule fragments of dichroic compounds may form a three-dimensional crystalline lattice within the layer 32. In particular, dichroic compounds selected from the class of azo dyes or from the class of polycyclic dyes form such crystalline lattices. For example, the dichroic compounds may be sulfonation products of indanthrone, Vat dark green G dye, VAT Scarlet 2G dye, quinacridone or dibenzoimidazole derivative of perylene tetracarboxylic acid. Such compounds are disclosed in US patent 6,563,640. The dichroic compounds may also be a mixture of sulfonation products of indanthrone, VAT Scarlet 2G dye and dibenzoimidazole derivative of perylene tetracarboxylic acid.

Then, a stress is applied to the layer 32, in order to orientate the dichroic compounds along a single direction. Such orientation is necessary for the dichroic compounds to produce a macroscopic polarizing effect for a light beam transmitted through the layer 32. The stress may be applied by stretching the resilient support 31 with the layer 32 thereon, or by rolling a rod on the layer 32 supported by the resilient support 31 with a controlled thrust. Applying the stress can be performed easily because the resilient support 31 is in a planar shape at this moment.

According to a preferred embodiment of the invention, the polarizing layer 32 is applied on the surface of the resilient support 31 by depositing a liquid crystalline solution onto this surface so as to form a layer, the solution further incorporating dichroic compounds having planar structures. Then the layer is dried. In this case, the dichroic compounds are orientated within the layer by the liquid crystalline molecules. Depending of the type of the liquid crystalline solution, the liquid crystalline molecules may orientate spontaneously, or it may be necessary to apply an orientating stress to the layer 32. Such stress may be applied during the deposition of the liquid crystalline solution onto the support surface, or after this deposition. In this embodiment, the liquid crystalline molecules form a layer matrix which sets the angular orientation of the dichroic compounds inserted within this matrix.

From this moment of the process, the layer 32 has a polarizing effect due to the orientation of the dichroic compounds. This orientation of the dichroic compounds may be characterized optically by measuring optical densities of a light beam transmitted through the layer 32. These optical densities are denoted $D_T$ and $D_L$ and are measured with the polarization plane of the layer 32 orientated perpendicular and parallel to a polarization plane of the light beam before transmission, respectively. Then, an order parameter S is calculated from the measured optical densities according to the formula:

$$S = \frac{D_T - D_L}{D_T + 2D_L}. \qquad (1)$$

A polarizing effect which is compatible with many applications is obtained when S is equal to or greater than 0.8. Such value is achieved before preforming and transferring the layer 32 from the support 31 onto the eyeglass 21. The order parameter S then remains definitively greater than 0.8.

The carrier 30 is mounted on the vacuum vessel 1 so as to form the sealing diaphragm. It is firmly maintained by means of the fixing ring 8 with the polarizing layer 32 facing the upper surface of the eyeglass 21.

The carrier 30 is preformed so that the polarizing layer 32 acquires a curvature compatible with that of the upper surface of the eyeglass 21. In this purpose, the stamp 11 is moved downwards so as to emboss the resilient support 31 on a side of this support opposite to the polarizing layer 32. The preforming step may be carried out, for example, with a controlled pressure equal to or greater than 20 bars. Such preforming does not generate significant stresses in the layer 32, because the stresses are absorbed by the resilient support 31. So, thanks to the use of the resilient support 31, the order parameter S does not decrease, which indicates that the orientation of the dichroic compounds in the layer 32 does not vary significantly.

Then, the polarizing layer 32 is applied on the eyeglass 21. Preferably, this application is carried out with a two-step process. First, the eyeglass 21 is moved upwards until a point-contact is made between the adhesive layer 22 and the polarizing layer 32. This is achieved by creating a depression in the sealed volume of the vacuum vessel 1. The gap between the adhesive layer 22 and the polarizing layer 32 is reduced as the piston 3 rises because of the depression. The stop-system 6 is set on when the upper surface of the eyeglass 21 enters into contact with the support 31 maintained by the fixing ring 8. Then the height of the eyeglass 21 is fixed.

The stamping system 15 is then further lowered; so that the resilient support 31 is forced against the surface of the eyeglass 21 by the stamp 11. Thus, the polarizing layer 32 is pressed on the adhesive layer 22 at any point of the curved surface of the eyeglass. Thanks to the preforming step carried out before and to the application process described, the polarizing layer 32 can be uniformly applied on the eyeglass 21, without forming defects nor overlapping parts in the polarizing layer. The stamp 11 may be provided with a resilient pad at its lower end, so that it conforms with the shape of the upper surface of the eyeglass 21. Such resilient pad may be part of the stamp 11 and may also be used for warping the resilient support 31 during the preforming step. Thus, the carrier 30 is applied on the whole surface of the substrate 20.

During the application step, the adhesive layer 22 adheres to the polarizing layer 32, so that the carrier 30 becomes fixed on the eyeglass 21.

The eyeglass 21 together with the carrier 30 are removed from the vacuum vessel 1. Then, the resilient support 31 is peeled from the eyeglass 21, so that the polarizing layer 32 remains stuck on the eyeglass surface.

According to a first improvement of the invention, the polarizing layer 32 is applied on the resilient support 31 with a release layer 33 arranged between the support 31 and the layer 32. Such release layer may comprise an acrylic matrix and at least one release promoter of well-known type, such as silicone surfactants. It makes it easier to separate the support 31 from the polarizing layer 32. In addition, the peeling of the support 31 from the eyeglass surface generates less stresses within the polarizing layer 32, thus causing less disturbance in the orientation of the dichroic compounds. For example, the release layer 32 may be formed by using Coatosil 3503 precursor solution produced by OSI company, Coatsil 3503 composition is based on an acrylated siloxane polyalkyleneoxide copolymer dissolved in n-propanol and leads to satisfying results.

According to a second improvement of the invention, a further step is carried out in the process of providing the polarizing layer 32 on the eyeglass 21, which consists in treating the polarizing layer with at least a solution of bi- or tri-valent metal salt, so that the layer 32 becomes water-insoluble. Then, the eyeglass may be washed with water, for example for removing dust or stains, without affecting the polarizing efficiency.

Figure 4 relates to an alternative implementation of the invention. In this implementation, the substrate 20 of Figure 3 is arranged on a holder 107, with the adhesive layer 22 facing upwards.

An enclosure 100 of cylindrical shape with vertical axis has an opened bottom face with a fixing ring 108. The fixing ring 108 makes it possible to arrange firmly a carrier 30 so as to seal the enclosure 100 on a bottom closing face. A gas inlet 109 is also provided for generating a pressure inside the enclose 100, so as to inflate the carrier 30. The carrier 30 is mounted with the polarizing layer 32 facing the adhesive layer 22 of the substrate 20.

The sealed enclosure 100 is arranged fixedly above the substrate 20, by means of a supporting structure. A cylinder 102 and a piston 103 are designed for raising the upper surface of the substrate 20 just below the carrier 30 when this latter is planar. The stop-system 106 is set on to fix the distance between the ring 108 and the holder 107. Alternatively, the holder 7 may be fixed in height and the enclosure 100 may be provided with a suitable lowering system. The lower peripheral edge of the enclosure 100 may be provided with a tapered rim 116, for proper alignment of the enclosure with respect to the substrate 20. The pressure inside the enclosure 100 is increased so that the carrier 30 is inflated and pressed against the substrate 20 (dotted lines on Figure 4). In this implementation, the preforming of the polarizing layer 32 is carried out simultaneously with its contacting with the adhesive layer 22. In a manner similar to that of the preceding implementation, the value of the order parameter S of the polarizing layer 32 is not reduced below 0.8 because the resilient support 21 withstands most of the stresses. Additionally, the use of a fluid pressure for forcing the carrier 30 against the substrate 20 leads to a soft and progressive application of the polarizing layer 32 onto the adhesive layer 22. For example, the fluid pressure necessary for this application may be greater than or equal to 5 psi (about 0.35 bar).

The invention described in details here-above according to two different implementations may be adapted or modified in order to comply with special applications. For example, an additional coating may be first formed on the surface of the resilient support, and the polarizing layer is formed on top of this additional coating. The additional coating is then transferred onto the eyeglass together with the polarizing layer, like a single composite layer. In this case, a release layer may be used between the support surface and the additional coating. After transfer, the additional coating is arranged on the polarizing layer, on a side opposite to the eyeglass. The additional coating may be, for example an antireflective coating, a hard coating, a low-friction coating or a hydrophobic coating.

It is also possible to use a UV-curable adhesive material on the eyeglass. Then, the eyeglass is exposed to UV-radiation after the carrier application, so that the polarizing layer is firmly adhered to the eyeglass. In the second embodiment of the invention, such UV-irradiation may be performed as the gas pressure is still applied to the carrier. It is necessary that the carrier is UV-transparent and that a UV-source can be directed onto the eyeglass through the enclosure.

**Claims**

1. Method for providing a polarizing layer on a curved optical element (21), comprising the following steps:

   /a/ applying a polarizing layer (32) on a surface of a resilient support (31), said support being in a planar shape;
   /b/ warping the resilient support (31) with the polarizing layer (32) thereon;
   /c/ bringing the polarizing layer (32) supported by the warped support (31) into contact with a curved surface of the optical element; and
   /d/ removing the support from the optical element (21) surface so that the polarizing layer (32) is transferred from the support onto the optical element (21),

   wherein the optical element (21) surface is coated with an adhesive layer (22) prior to step /c/.

2. Method according to Claim 1, wherein step /a/ comprises the following substeps:

   /a1/ forming a layer of a substance comprising organic dichroic compounds on the surface of the resilient support; and
   /a2/ applying a stress to the substance layer when the resilient support is in a planar shape, so that the dichroic compounds produce a polarizing effect of the substance layer for a light beam transmitted through said layer.

3. Method according to Claim 1, wherein the polarizing layer has an order parameter S equal to or greater than 0.8 during steps /b/ to /d/, said order parameter S being calculated using the following formula :

$$S = \frac{D_T - D_L}{D_T + 2D_L} \qquad\qquad (1)$$

where $D_T$ and $D_L$ are measured optical densities of a light beam after being transmitted through the polarizing layer, respectively for transverse and parallel orientations of a polarization plane of the polarizing layer with respect to a polarization plane of the light beam before transmission.

4. Method according to Claim 1, wherein the polarizing layer is applied on the resilient support in step /a/ with a release layer arranged between said resilient support and said polarizing layer.

5. Method according to Claim 1, wherein the adhesive layer comprises a material selected from a family comprising epoxy-type materials, pressure-sensitive adhesives and latex-type materials.

6. Method according to Claim 1, wherein the polarizing layer comprises dichroic compounds, at least part of said dichroic compounds being molecules or molecule fragments with planar structures and forming a crystalline lattice in the polarizing layer.

7. Method according to Claim 6, wherein the dichroic compounds are selected from the class of azo dyes or selected from the class of polycyclic dyes.

8. Method according to Claim 7, wherein the dichroic compounds are selected from the list comprising sulfonation products of indanthrone, Vat dark green G dye, VAT Scarlet 2G dye, quinacridone and dibenzoimidazole derivative of perylene tetracarboxylic acid.

9. Method according to Claim 1, wherein step /a/ comprises depositing a liquid crystalline solution onto the surface of the resilient support so as to form a layer, said solution further incorporating dichroic compounds having planar structures, and step /a/ further comprises drying the solution layer.

10. Method according to Claim 1, further comprising a step of treating the polarizing layer with at least a solution of bi- or tri-valent metal salt, so that the polarizing layer becomes water-insoluble.

11. Method according to Claim 2, wherein step /a2/ is carried out by stretching the resilient support with the substance layer thereon.

12. Method according to Claim 2, wherein step /a2/ is carried out by rolling a rod on the substance layer supported by the resilient support in a planar shape, with a controlled thrust.

13. Method according to Claim 1, wherein step /b/ is carried out by embossing the resilient support with a stamp on a side of said support opposite to the polarizing layer.

14. Method according to Claim 1, wherein step /c/ is carried out with a two-step process comprising:

/c1/ moving the optical element towards the polarizing layer until a point-contact is made between the adhesive layer and the polarizing layer; and
/c2/ forcing the support against the optical element surface until the polarizing layer is pressed on the adhesive layer at any point of the curved surface of said optical element.

15. Method according to Claim 1, wherein steps /b/ and /c/ are carried out simultaneously, so that the polarizing layer enters in contact with the adhesive layer on the curved surface of the optical element when the resilient support is made warped with the polarizing layer thereon.

16. Method according to Claim 15, wherein the resilient support is made warped by forcing said support with the polarizing layer thereon against the optical element surface, by means of a fluid pressure applied to the resilient support on a side of said support opposite to the polarizing layer.

17. Method according to Claim 1, wherein an additional coating is first formed on the support surface, the polarizing layer being formed on top of said additional coating in step /a/, and wherein said additional coating is transferred onto the optical element together with the polarizing layer in steps /b/ to /d/.

18. Optical element comprising:

- an optical base element (21) with at least one curved surface;
- an adhesive layer (22) arranged on said curved surface; and
- a polarizing layer (32) retained on the optical base element (21) by the adhesive layer,

wherein the polarizing layer (32) comprises organic dichroic compounds arranged within said polarizing layer so as to produce a polarizing effect for a light beam transmitted through the optical element.

19. Optical element according to Claim 18, designed for ophthalmic use.

20. Optical element according to Claim 18, wherein the dichroic compounds are molecules or molecule fragments having planar structures, and wherein at least part of said compounds form a crystalline lattice in the polarizing layer.

21. Optical element according to Claim 20, wherein the dichroic compounds are selected from the class of azo dyes, or selected from the class of polycyclic dyes.

22. Optical element according to Claim 21, wherein the dichroic compounds are selected from the list comprising sulfonation products of indanthrone, Vat dark green G dye, VAT Scarlet 2G dye, quinacridone and dibenzoimidazole derivative of perylene tetracarboxylic acid.

23. Optical element according to Claim 18, further comprising an additional coating arranged on the polarizing layer, on a side opposite to the optical base element, wherein the additional coating comprises an antireflective coating, a hard coating, a low-friction coating or a hydrophobic coating.

**Patentansprüche**

1. Verfahren zum Bilden einer Polarisationsschicht auf einem gekrümmten optischen Element (21), umfassend die folgenden Schritte:

/a/ Aufbringen einer Polarisationsschicht (32) auf einer Oberfläche eines nachgiebigen Trägers (31), wobei der Träger in einer planaren Gestalt vorliegt;
/b/ Verdrehen des nachgiebigen Trägers (31) mit der Polarisationsschicht (32) darauf;
/c/ Bringen der von dem verdrehten Träger (31) getragenen Polarisationsschicht (32) in Kontakt mit einer gekrümmten Oberfläche des optischen Elements und
/d/ Entfernen des Trägers von der Oberfläche des optischen Elements (21), so daß die Polarisationsschicht (32) von dem Träger auf das optische Element (21) transferiert wird,

wobei die Oberfläche des optischen Elements (21) vor Schritt /c/ mit einer Klebeschicht (22) beschichtet wird.

2. Verfahren nach Anspruch 1, wobei Schritt /a/ die folgenden Teilschritte umfaßt:

/a1/ Ausbilden einer Schicht aus einer Substanz, die organische dichroitische Verbindungen umfaßt, auf der Oberfläche des nachgiebigen Trägers; und
/a2/ Ausüben einer Beanspruchung auf die Substanzschicht, wenn sich der nachgiebige Träger in einer planaren Gestalt befindet, so daß die dichroitischen Verbindungen einen Polarisationseffekt der Substanzschicht für einen durch die Schicht übertragenen Lichtstrahl produzieren.

3. Verfahren nach Anspruch 1, wobei die Polarisationsschicht einen Ordnungsparameter S größer oder gleich 0,8 während der Schritte /b/ bis /d/ aufweist, wobei der Ordnungsparameter S unter Verwendung der folgenden Formel berechnet wird:

$$S = \frac{D_T - D_L}{D_T + 2D_L} \qquad (1)$$

wobei $D_T$ und $D_L$ gemessene optische Dichten eines Lichtstrahls nach dem Übertragen durch die Polarisationsschicht jeweils für Quer- und Parallelorientierungen einer Polarisationsebene der Polarisationsschicht bezüglich einer Polarisationsebene des Lichtstrahls vor der Übertragung sind.

4. Verfahren nach Anspruch 1, wobei die Polarisationsschicht im Schritt /a/ mit einer zwischen dem nachgiebigen Träger und der Polarisationsschicht angeordneten Trennschicht auf dem nachgiebigen Träger aufgebracht wird.

5. Verfahren nach Anspruch 1, wobei die Klebeschicht ein Material umfaßt ausgewählt aus einer Familie umfassend Materialien vom Expoxidtyp, druckempfindliche Kleber und Materialien vom Latextyp.

6. Verfahren nach Anspruch 1, wobei die Polarisationsschicht dichroitische Verbindungen umfaßt, wobei es sich mindestens bei einem Teil der dichroitischen Verbindungen um Moleküle oder Molekülfragmente mit planaren Strukturen handelt, die in der Polarisationsschicht ein Kristallgitter bilden.

7. Verfahren nach Anspruch 6, wobei die dichroitischen Verbindungen ausgewählt werden aus der Klasse aus Azo-Farbstoffen oder ausgewählt werden aus der Klasse von polyzyklischen Farbstoffen.

8. Verfahren nach Anspruch 7, wobei die dichroitischen Verbindungen ausgewählt werden aus der Liste umfassend Sulfonierungsprodukte von Indanthron, dem Farbstoff Vat Dark-Green G, dem Farbstoff VAT Scarlet 2G, Chinacridon und Dibenzoimidazol-Derivat von Perylentetracarbonsäure.

9. Verfahren nach Anspruch 1, wobei Schritt /a/ das Abscheiden einer Flüssigkristallösung auf der Oberfläche des nachgiebigen Trägers umfaßt, um eine Schicht auszubilden, wobei die Lösung weiterhin dichroitische Verbindungen mit planaren Strukturen enthält, und Schritt /a/ weiterhin das Trocknen der Lösungsschicht umfaßt.

10. Verfahren nach Anspruch 1, weiterhin umfassend einen Schritt des Behandelns der Polarisationsschicht mit mindestens einer Lösung eines bi- oder trivalenten Metallsalzes, so daß die Polarisationsschicht wasserunlöslich wird.

11. Verfahren nach Anspruch 2, wobei Schritt /a2/ ausgeführt wird durch Dehnen des nachgiebigen Trägers mit der Substanzschicht darauf.

12. Verfahren nach Anspruch 2, wobei Schritt /a2/ ausgeführt wird durch Rollen eines Stabs auf der von dem nachgiebigen Träger getragenen Substanzschicht zu einer planaren Gestalt mit einem gesteuerten Schub.

13. Verfahren nach Anspruch 1, wobei Schritt /b/ ausgeführt wird durch Prägen des nachgiebigen Trägers mit einem Stempel auf einer Seite des Trägers gegenüber der Polarisationsschicht.

14. Verfahren nach Anspruch 1, wobei Schritt /c/ ausgeführt wird mit einem zweistufigen Prozeß, umfassend:

/c1/ Bewegen des optischen Elements zu der Polarisationsschicht, bis zwischen der Klebeschicht und der Polarisationsschicht ein Punktkontakt hergestellt ist; und
/c2/ Drücken des Trägers gegen die Oberfläche des optischen Elements, bis die Polarisationsschicht an einem beliebigen Punkt der gekrümmten Oberfläche des optischen Elements auf die Klebeschicht gepreßt ist.

15. Verfahren nach Anspruch 1, wobei die Schritte /b/ und /c/ gleichzeitig ausgeführt werden, so daß die Polarisationsschicht in Kontakt mit der Klebeschicht auf der gekrümmten Oberfläche des optischen Elements eintritt, wenn der nachgiebige Träger mit der Polarisationsschicht darauf verdreht gemacht wird.

16. Verfahren nach Anspruch 15, wobei der nachgiebige Träger verdreht gemacht wird, indem der Träger mit der Polarisationsschicht darauf gegen die Oberfläche des optischen Elements gedrückt wird mit Hilfe eines Fluiddrucks, der auf den nachgiebigen Träger auf einer Seite des Trägers gegenüber der Polarisationsschicht ausgeübt wird.

17. Verfahren nach Anspruch 1, wobei eine zusätzliche Beschichtung zuerst auf der Trägeroberfläche ausgebildet wird, wobei die Polarisationsschicht auf der zusätzlichen Beschichtung im Schritt /a/ ausgebildet wird und wobei die zusätzliche Beschichtung zusammen mit der Polarisationsschicht in den Schritten /b/ bis /d/ auf das optische Element transferiert wird.

**18.** Optisches Element, umfassend:

- ein optisches Basiselement (21) mit mindestens einer gekrümmten Oberfläche;
- eine auf der gekrümmten Oberfläche angeordnete Klebeschicht (22) und
- eine auf dem optischen Basiselement (21) durch die Klebeschicht festgehaltene Polarisationsschicht (32),

wobei die Polarisationsschicht (32) organische dichroitische Verbindungen umfaßt, die innerhalb der Polarisationsschicht angeordnet sind, um einen polarisierenden Effekt für einen durch das optische Element übertragenen Lichtstrahl zu produzieren.

**19.** Optisches Element nach Anspruch 18, ausgelegt zur ophthalmischen Verwendung.

**20.** Optisches Element nach Anspruch 18, wobei die dichroitischen Verbindungen Moleküle oder Molekülfragmente mit planaren Strukturen sind und wobei mindestens ein Teil der Verbindungen in der Polarisationsschicht ein Kristallgitter bilden.

**21.** Optisches Element nach Anspruch 20, wobei die dichroitischen Verbindungen ausgewählt werden aus der Klasse aus Azo-Farbstoffen oder ausgewählt werden aus der Klasse von polyzyklischen Farbstoffen.

**22.** Optisches Element nach Anspruch 21, wobei die dichroitischen Verbindungen ausgewählt werden aus der Liste umfassend Sulfonierungsprodukte von Indanthron, dem Farbstoff Vat Dark-Green G, dem Farbstoff VAT Scarlet 2G, Chinacridon und Dibenzoimidazol-Derivat von Perylentetracarbonsäure.

**23.** Optisches Element nach Anspruch 18, weiterhin umfassend eine auf der Polarisationsschicht auf einer Seite gegenüber dem optischen Basiselement angeordnete zusätzliche Beschichtung, wobei die zusätzliche Beschichtung eine Antireflexbeschichtung, eine harte Beschichtung, eine reibungsarme Beschichtung oder eine hydrophobe Beschichtung umfaßt.

**Revendications**

**1.** Procédé pour rapporter une couche polarisante sur un élément optique courbe (21), comprenant les étapes suivantes :

/a/ appliquer une couche polarisante (32) sur une surface d'un support souple (31), ledit support étant de forme plane ;
/b/ courber le support souple (31) avec la couche polarisante (32) sur celui-ci ;
/c/ mettre la couche polarisante (32) supportée par le support courbé (31) en contact avec une surface courbe de l'élément optique ; et
/d/ retirer le support de la surface de l'élément optique (21) de sorte que la couche polarisante (32) soit transférée à partir du support sur l'élément optique (21),

dans lequel la surface de l'élément optique (21) est enduite avec une couche adhésive (22) avant l'étape /c/.

**2.** Procédé selon la revendication 1, dans lequel l'étape /a/ comprend les sous-étapes suivantes :

/a1/ former une couche d'une substance comprenant des composés dichroïques organiques sur la surface du support souple ; et
/a2/ appliquer une contrainte sur la couche de substance lorsque le support souple est de forme plane, de sorte que les composés dichroïques produisent un effet polarisant de la couche de substance pour un faisceau lumineux transmis à travers ladite couche.

**3.** Procédé selon la revendication 1, dans lequel la couche polarisante possède un paramètre d'ordre S égal ou supérieur à 0,8 au cours des étapes /b/ à /d/, ledit paramètre d'ordre S étant calculé en utilisant la formule suivante :

$$S = \frac{D_T - D_L}{D_T + 2D_L} \qquad (1)$$

où $D_T$ et $D_L$ sont des densités optiques mesurées d'un faisceau lumineux après avoir été transmis à travers la couche polarisante, respectivement pour des orientations transversale et parallèle d'un plan de polarisation de la couche polarisante par rapport à un plan de polarisation du faisceau lumineux avec la transmission.

4.  Procédé selon la revendication 1, dans lequel la couche polarisante est appliquée sur le support souple à l'étape /a/ avec une couche de décollage agencée entre ledit support souple et ladite couche polarisante.

5.  Procédé selon la revendication 1, dans lequel la couche adhésive comprend un matériau sélectionné parmi une famille comprenant des matériaux de type époxy, des adhésifs sensibles à la pression et des matériaux de type latex.

6.  Procédé selon la revendication 1, dans lequel la couche polarisante comprend des composés dichroïques, au moins une partie desdits composés dichroïques étant des molécules ou des fragments de molécule avec des structures planes et formant un réseau cristallin dans la couche polarisante.

7.  Procédé selon la revendication 6, dans lequel les composés dichroïques sont sélectionnés parmi la catégorie de colorants azoïques ou sélectionnés parmi la catégorie de colorants polycycliques.

8.  Procédé selon la revendication 7, dans lequel les composés dichroïques sont sélectionnés parmi la liste comprenant des produits de sulfonation d'indanthrone, le colorant de cuve G vert foncé, le colorant de cuve 2G écarlate, la quinacridone et le dérivé de dibenzoimidazole d'acide tétracarboxylique de pérylène.

9.  Procédé selon la revendication 1, dans lequel l'étape /a/ comprend un dépôt d'une solution cristalline liquide sur la surface du support souple afin de former une couche, ladite solution incorporant en outre des composés dichroïques possédant des structures planes, et l'étape /a/ comprend en outre un séchage de la couche de solution.

10. Procédé selon la revendication 1, comprenant en outre une étape de traitement de la couche polarisante avec au moins une solution de sel métallique bi- ou trivalent, de sorte que la couche polarisante devienne hydro-insoluble.

11. Procédé selon la revendication 2, dans lequel l'étape /a2/ est réalisée en étirant le support souple avec la couche de substance sur celui-ci.

12. Procédé selon la revendication 2, dans lequel l'étape /a2/ est réalisée en faisant rouler une barre sur la couche de substance supportée par le support souple en forme plane, avec une poussée contrôlée.

13. Procédé selon la revendication 1, dans lequel l'étape /b/ est réalisée en enfonçant le support souple avec un tampon sur un côté dudit support opposé à la couche polarisante.

14. Procédé selon la revendication 1, dans lequel l'étape /c/ est réalisée avec un traitement à deux étapes comprenant :

    /c1/ déplacer l'élément optique vers la couche polarisante jusqu'à ce qu'un contact ponctuel soit réalisé entre la couche adhésive et la couche polarisante ; et
    /c2/ forcer le support contre la surface de l'élément optique jusqu'à ce que la couche polarisante soit comprimée sur la couche adhésive en tout point de la surface courbe dudit élément optique.

15. Procédé selon la revendication 1, dans lequel les étapes /b/ et /c/ sont réalisées simultanément, de sorte que la couche polarisante entre en contact avec la couche adhésive sur la surface courbe de l'élément optique lorsque le support souple est courbé avec la couche polarisante sur celui-ci.

16. Procédé selon la revendication 15, dans lequel le support souple est courbé en forçant ledit support avec la couche polarisante sur celui-ci contre la surface de l'élément optique, au moyen d'une pression de fluide appliquée sur le support souple sur un côté dudit support opposé à la couche polarisante.

17. Procédé selon la revendication 1, dans lequel un revêtement supplémentaire est d'abord formé sur la surface de support, la couche polarisante étant formée pardessus ledit revêtement supplémentaire dans l'étape /a/, et dans lequel ledit revêtement supplémentaire est transféré sur l'élément optique avec la couche polarisante dans les étapes /b/ à /d/.

**18.** Élément optique comprenant :

- un élément optique de base (21) avec au moins une surface courbe ;
- une couche adhésive (22) agencée sur ladite surface courbe ; et
- une couche polarisante (32) retenue sur l'élément optique de base (21) par la couche adhésive,

dans lequel la couche polarisante (32) comprend des composés dichroïques organiques agencés au sein de ladite couche polarisante afin de produire un effet polarisant pour un faisceau lumineux transmis à travers l'élément optique.

**19.** Élément optique selon la revendication 18, conçu pour une utilisation ophtalmique.

**20.** Élément optique selon la revendication 18, dans lequel les composés dichroïques sont des molécules ou des fragments de molécule possédant des structures planes, et dans lequel au moins une partie desdits composés forme un réseau cristallin dans la couche polarisante.

**21.** Élément optique selon la revendication 20, dans lequel les composés dichroïques sont sélectionnés parmi la catégorie de colorants azoïques, ou sélectionnés parmi la catégorie de colorants polycycliques.

**22.** Élément optique selon la revendication 21, dans lequel les composés dichroïques sont sélectionnés parmi la liste comprenant des produits de sulfonation d'indanthrone, le colorant de cuve G vert foncé, le colorant de cuve 2G écarlate, la quinacridone et le dérivatif de dibenzoimidazole d'acide tétracarboxylique de pérylène.

**23.** Élément optique selon la revendication 18, comprenant en outre un revêtement supplémentaire agencé sur la couche polarisante, sur un coté opposé à l'élément optique de base, dans lequel le revêtement supplémentaire comprend un revêtement anti-reflet, un revêtement dur, un revêtement à faible frottement ou un revêtement hydrophobe.

**FIG. 1**

**FIG. 2**

**FIG. 3**

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9508133 A

- US 6563640 B